(19) Europäisches Patentamt
European Patent Office
Office européen des brevets

(11) **EP 3 029 417 B1**

(12) **EUROPEAN PATENT SPECIFICATION**

(45) Date of publication and mention of the grant of the patent:
**01.07.2020  Bulletin 2020/27**

(51) Int Cl.:
**G01B 11/275** (2006.01)

(21) Application number: **15196225.5**

(22) Date of filing: **25.11.2015**

(54) **METHOD OF DETERMINATION AND/OR CONTINUOUS DETERMINATION OF A LINEAR AND/OR ANGULAR DEVIATION/DEVIATIONS OF THE PATH OR AREA OF A WORKPIECE OR A PART OF THE MACHINE FROM THE AXIS OF ROTATION OF ITS SPINDLE AND A DETECTING DEVICE FOR PERFORMING IT**

VERFAHREN ZUR BESTIMMUNG UND/ODER KONTINUIERLICHEN BESTIMMUNG EINER/VON LINEAREN UND/ODER WINKELABWEICHUNG/-ABWEICHUNGEN DES WEGES ODER DER FLÄCHE EINES WERKSTÜCKS ODER EINES TEILS DER MASCHINE VON DER DREHACHSE IHRER SPINDEL UND ERKENNUNGSVORRICHTUNG ZUR DURCHFÜHRUNG DES VERFAHRENS

PROCÉDÉ DE DÉTERMINATION ET/OU DE DÉTERMINATION EN CONTINU D'UN ÉCART/D'ÉCARTS LINÉAIRE(S) ET/OU ANGULAIRE(S) DE LA TRAJECTOIRE OU DE LA SURFACE D'UNE PIÈCE OU D'UNE PARTIE DE LA MACHINE À PARTIR DE L'AXE DE ROTATION DE SA BROCHE ET DISPOSITIF DE DÉTECTION POUR SON EXÉCUTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.12.2014  CZ 20140855**

(43) Date of publication of application:
**08.06.2016  Bulletin 2016/23**

(73) Proprietor: **VÚTS, a.s.**
**Liberec XI - Ruzodol I**
**460 01 Liberec (CZ)**

(72) Inventors:
• **SIDLOF, Pavel**
**460 14 Liberec 14 (CZ)**

• **SKOP, Petr**
**460 01 Liberec (CZ)**

(74) Representative: **Musil, Dobroslav**
**Zabrdovicka 801/11**
**615 00 Brno (CZ)**

(56) References cited:
**DE-A1- 3 814 466      DE-A1- 19 907 880**
**US-A- 6 049 378      US-A1- 2002 129 504**
**US-A1- 2003 016 367      US-A1- 2005 193 806**
**US-B1- 6 342 946**

**Description**

**Technical field**

The invention relates to a method of determination of a linear deviation and/or an angular deviation of the path or plane of a workpiece or of a machine part from the axis of rotation of the spindle of the machine.

**Background art**

For determination or continuous determination of a linear and/or angular deviation/deviations of the path or plane of a workpiece or of a machine part, e.g. a clamping table, a lathe carriage, a tailstock, etc., from the axis of rotation of a spindle of a machine (horizontal, vertical or angular) it is nowadays usual to use especially a method of measuring linear deviations by means of a measuring pin, whereby angular deviations are subsequently calculated from the measured linear deviations. In this method, the measuring pin is clamped to a spindle of a machine tool and linear deviations of the path of the relative movement of a particular part of a machine or a workpiece are measured relative to the cylindrical surface of the measuring pin, e.g. by means of a drift meter. However, the disadvantage of this method is above all the limited length of the measuring pin and also the fact that the measured linear deviations are distorted due to production inaccuracies of the measuring pin, deformation of the measuring pin caused by its own weight, by the pin's run out, and by errors arising due to the fact that the drift meter does not always observe the cylindrical surface of the pin precisely, etc.

Another method of determination or continuous determination of a linear and/or angular deviation/deviations of the path or plane of a workpiece or a machine part, which eliminates inaccuracies connected to the measuring pin, is using a leveling telescope or an autocollimator. Nevertheless, the disadvantage of this method is considerably difficult and time-consuming setting up of the leveling telescope or autocollimator, which would really guarantee the measurement of a deviation/deviations with respect to the axis of rotation of the spindle.

The same disadvantage can also be found in another method of determination of a linear and/or angular deviation/deviations of the path or plane of a workpiece or a machine part which is based on using a laser interferometer. Another drawback of this method is the necessity of using expensive equipment, as well as requirement for highly experienced operators.

The aim of the invention is to propose a method of determination of a linear deviation and/or angular deviation of the path or plane of a workpiece or of a machine part from the axis of rotation of the spindle of the machine, which would eliminate the disadvantages of the background art by making it as simple as possible from the point of view of attendance and at the same time would be as accurate as possible, minimizing the influences which would distort the values of the deviation/deviations.

**Principle of the invention**

The goal of the invention is achieved by a method of determination of a linear deviation and/or angular deviation of a path or a plane of a workpiece or of a machine part, especially of a machine tool, from the axis of rotation of the spindle of the machine, whose principle consists in that a source of a laser beam is clamped to the spindle, and at least at two optical distances from the end of the spindle, points of incidence of the laser beam or its components created by splitting the laser beam by a beam splitter or the geometric shapes drawn by the laser beam or by its components are successively or simultaneously recorded on the path or plane of a workpiece or a machine part. After that, these optical distances change by a shift of the detecting device and/or its electronic optical sensor/sensors relative to the end of the spindle, and at the optical distances thus changed, points of incidence of the laser beam or of its components or the geometric shapes drawn by the laser beam or by its components are successively or simultaneously recorded or continuously recorded. The linear deviation of the path or plane of the workpiece or the machine part from the axis of rotation of the spindle of the machine is then directly determined by the shift of the points of incidence of the laser beam or its components or of the center of the geometric shape drawn by the laser beam or by its components, which is caused by a change of the optical distance/distances. From the linear deviation thus obtained it is then possible to calculate or continuously calculate the angular deviation in the respective axis. According to the requirements, it is possible to determine or determine continuously, e.g., only a linear deviation and/or angular deviation in the direction of one of the axes.

Depending on the used detecting device, the points of incidence of the laser beam or the geometric shapes drawn by the laser beam are recorded or continuously recorded on the optical matrix of one electronic optical sensor arranged opposite the end of the spindle, while the optical sensor moves between positions at different optical distances from the end of the spindle, or they are successively recorded on the optical matrices of two electronic optical sensors, which are arranged behind each other opposite the end of the spindle at different optical distances from it, whereby the electronic optical sensor arranged at a lesser optical distance from the end of the spindle shifts at least temporarily off the path of the laser beam for the purpose of recording the points of incidence of the laser beam or the geometric shape drawn by the laser beam on the optical matrix of the optical sensor arranged at a greater distance from the end of the spindle.

When using the detecting device in another variant of embodiment, the laser beam is split into two components, whereby the points of incidence of these components are recorded, or continuously recorded, or the geometric shapes drawn by these components on the optical matrices of two electronic optical sensors are recorded, whereby each of these components strikes the optical matrix of the electronic optical sensor situated at a different optical distance from the end of the spindle or draws a geometric shape on this optical matrix.

In order to improve the accuracy of determination or continuous determination, it is advantageous if at least one component of the laser beam before striking the optical matrix of the electronic optical sensor is at least once reflected by an auxiliary mirror, by which means its path is extended.

In addition, it is advantageous in all the variants if for the elimination of a possible inaccuracy of the mounting of the laser beam source in the axis of rotation of the spindle, this spindle rotates at a suitable speed during recording the points of incidence of the laser beam or its components or during recording the geometric shapes drawn by the laser beam or by its components.

## Description of drawings

In the enclosed drawings, Fig. 1 schematically represents the principle of determination of a linear deviation and/or angular deviation of the path or a plane of a workpiece or a machine part from the axis of rotation of the spindle of the machine, and at the same time also the principle of the first variant of a detecting device for performing the method, Fig. 2a shows the second variant of the detecting device for performing the method and its principle, Fig. 2b shows the third variant of this detecting device and its principle, and Fig. 3 shows the principle of the method of determination of a linear deviation and/or angular deviation of the path or a plane of a workpiece or a machine part from the axis of rotation of the spindle in case the source of the laser beam is mounted off the axis of rotation of its spindle.

## Specific description

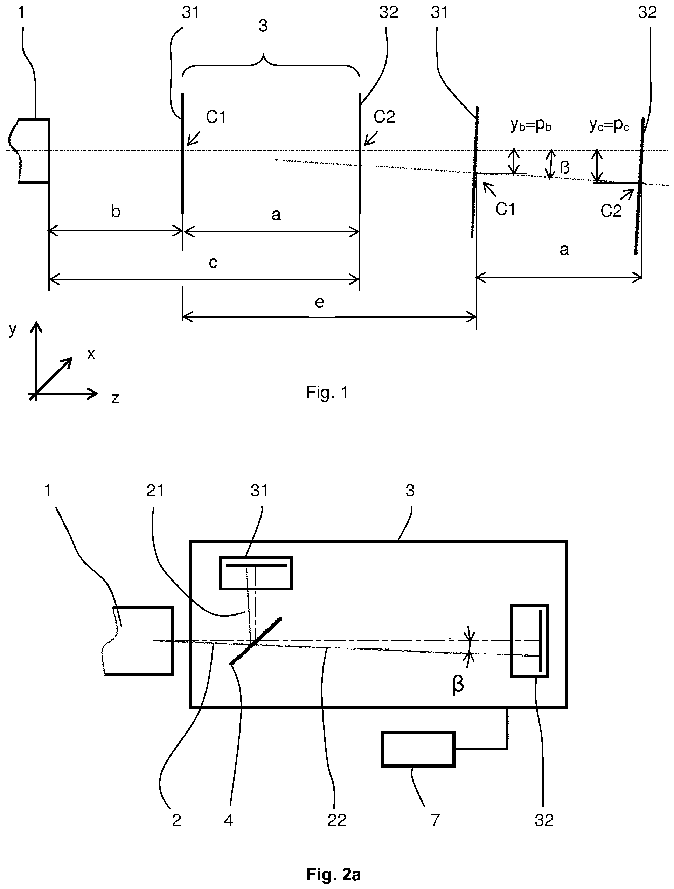

The method of determination of a linear deviation and/or an angular deviation of a path or a plane of a workpiece or a machine part (e.g. a clamping table, a lathe carriage, a tailstock, etc.) from the axis of rotation of the spindle **1** of the machine according to the invention will be explained on an example of a machine tool with a horizontal spindle **1** shown in Figs. 1 to 3, whereby this method is analogical in the case of a different orientation of the spindle **1,** as is obvious to a person skilled in the art. In the case of a horizontal spindle **1** deviations are determined or continuously determined in the direction of the vertical axis **y** (linear deviation **p** and angular deviation $\beta$) and/or in the direction of the horizontal axis **x** (linear deviation **q** and angular deviation $\gamma$); in the case of a vertical spindle **1** deviations are determined or continuously determined in the same manner in two mutually perpendicular horizontal axes; in the case of an angular spindle **1** in two suitable, mutually perpendicular axes which are at the same time also perpendicular to the axis of rotation of the spindle **1.**

In order to determine or continuously determine a linear deviation **p** and/or **q** and/or angular deviation $\beta$ and/or $\gamma$ of the path or plane of a workpiece or a machine part from the axis of rotation of the spindle **1** of the machine according to the invention, an unillustrated source of the laser beam **2** (e.g. a laser diode) is clamped to the spindle **1** in the axis of its rotation, and on the workpiece or the machine part, or in its path or on its plane, whose linear deviation **p** and/or **q** and/or angular deviation $\beta$ and/or $\gamma$ is/are determined, is located a detecting device **3** (see Fig. 1 to Fig. 2b), whose electronic optical sensor/sensors **31, 32** is/are with their optical matrix/matrices mounted on the axis of rotation of the spindle **1** or they extend to it.

In the first embodiment, the detecting device **3** (Fig. 1) contains two electronic optical sensors **31** and **32**, whose optical matrices are arranged behind each other at the optical distance **a** in the path of the laser beam **2**, whereby the electronic optical sensor **31,** which is arranged at a lesser optical distance **b** from the end of the spindle **1** is mounted tiltably and/or rotatably and/or shiftably, or otherwise movably, and is coupled to an unillustrated drive or a device for this motion. At the moment when a need arises for incidence of the laser beam **2** on the optical matrix of the electronic optical sensor **32,** which is arranged behind it, at a greater optical distance **c** from the end of the spindle **1,** the electronic optical sensor **31** is thus removed from the path of the laser beam **2,** or, on the contrary, when the need arises for incidence of the laser beam **2** on its optical matrix, it moves to the path of this beam **2**. Preferably, the mounting and the drive of the electronic optical sensor **31** also allow it to move back to the initial position for further recording. Under the term optical distance we understand the total length of the path of the laser beam **2** (and/or its components created by splitting the laser beam **2** emitted by the source of laser beam **2** by a beam splitter **4** - see below) between the two elements.

In the second variant of embodiment, the detecting device **3** (Fig. 2a) contains a beam splitter **4** (e.g. a semipermeable mirror, etc.), which is arranged in the path of the laser beam **2,** and two electronic optical sensors **31, 32,** each of which is with its optical matrix arranged behind the beam splitter **4** in the path of one component **21, 22** of the laser beam **2.** The beam splitter **4** then splits the laser beam **2** which strikes it into two components, whereby the component **21** reflected by the beam splitter **4** strikes the optical matrix of the electronic optical sensor **31** arranged off the axis of rotation of the spindle **1** (in the illustrated variant of embodiment the electronic optical sensor **31** being situated at a lesser optical distance from the end of the spindle **1**), whereas the through-component **22** passing through the beam splitter **4** strikes the optical matrix of the electronic optical sensor **32** arranged on the axis of the rotation of the spindle **1**, or in its vicinity (in the illustrated variant of embodiment the electronic optical sensor **32** being situated at a greater optical distance from the end of the spindle **1**). The optical distance **a** of the optical matrices of the electronic optical sensors **31, 32** is in that case determined as a difference between their optical distances from the beam splitter **4.** The optical distances **b** and **c** of the respective optical matrix of the electronic optical sensor **31**, or **32**, is then determined as a sum of the optical distance of the beam splitter **4** from the end of the spindle **1** and the optical distance of the beam splitter **4** from the optical matrix of the respective electronic optical sensor **31**, or **32**.

In an unillustrated variant of embodiment of the detecting device **3,** which is based on the variant shown in Fig. 2a, the optical distance of the optical matrix of the electronic optical sensor **31,** which senses the reflected component **21** of the laser beam **2** from the beam splitter **4**, may be greater than the optical distance of the optical matrix of the electronic optical sensor **32**, which senses the through-component **22** of the laser beam **2** from the beam splitter **4.** Consequently, the mathematical sign of their optical distance **a** changes during calculations.

In yet another unillustrated variant of embodiment, the through-component **22** passing through the beam splitter **4** can be deviated off the axis of rotation of the spindle **1,** and so the corresponding electronic optical sensor **32** is also mounted off this axis.

The detecting device **3** in the variants of embodiment described above may be further modified to include at least one unillustrated auxiliary mirror, which extends the length of the path of the reflected component **21** and/or through-component **22** of the laser beam **2,** or, as the case may be, that of the laser beam **2,** and thereby also the optical distance of the optical matrix of the corresponding electronic optical sensor **31** and/or **32** from the end of the spindle **1,** and the optical distance **a** between the optical matrices of the electronic optical sensors **31** and **32.** That enables to reduce the size of the detecting device **3,** while maintaining or even increasing the required accuracy of determination or continuous determination of a linear deviation **p** and/or **q** and/or an angular deviation $\beta$ and/or $\gamma$. Optionally, the optical distance of the optical matrix of the electronic optical sensor **31** sensing the reflected component **21** of the laser beam **2** from the beam splitter **4** may be greater than the optical distance of the optical matrix of the electronic optical sensor **32**, which senses the through-component **22** of the laser beam **2,** from the beam splitter **4,** thereby causing a change of mathematical sign of their optical distances **a** also in this case. In another variant of embodiment of the detecting device **3,** both electronic optical sensors **31, 32** may be arranged with their optical matrices off the axis of rotation of the spindle **1.**

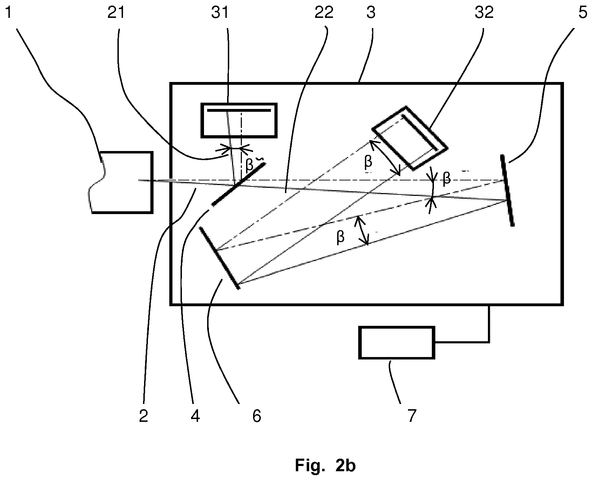

In the example of embodiment of the thus modified detecting device **3** shown in Fig. 2b, the detecting device **3** contains two auxiliary mirrors **5** and **6,** which extend the path of the through-component **22** of the laser beam **2** before it strikes the optical matrix of the corresponding electronic optical sensor **32** arranged in the illustrated variant of embodiment off the axis of rotation of the spindle **1,** thereby at the same time extending the optical distance **a** between the optical matrices of the electronic optical sensors **31, 32.** The optical distance **a** is in this case determined by the difference in the optical distances of the optical matrices of the electronic optical sensors **31, 32** from the beam splitter **4.** The optical distances **b** and **c** of the end of the spindle **1** from the optical matrix of the electronic optical sensor **31**, or **32** are then determined as a sum of the optical distances of the end of the spindle **1** from the beam splitter **4** and the optical distance of the beam splitter **4** from the optical matrix of the corresponding electronic optical sensor **31**, or **32.**

The optical distance **a** of the optical matrices of the electronic optical sensors **31, 32** and the optical distances **b** and **c** of the optical matrices of the electronic optical sensors **31** and **32** from the end of the spindle **1** are in these variants different (greater), than their physical distances.

In an unillustrated variant of embodiment of the detecting device **3,** the device contains only one electronic optical sensor **31.** This electronic optical sensor **31** is mounted on a precise guide, adjustably with its optical matrix between at least two positions in the path of the laser beam **2,** and, if necessary, it is coupled to a drive for this shift. As soon as a need arises for incidence of the laser beam **2** on the optical matrix arranged at a different optical distance from the end of the spindle **1,** the sensor **31** shifts along its guide in a required manner at least once towards or away from the end of the spindle **1.** The optical distance **a** is then determined by the distance, by which the sensor **31** or its optical matrix has shifted, the optical distance **b** is determined by any, e.g. the smallest, distance of the optical matrix of the electronic optical sensor **31** from the end of the spindle **1,** and the optical distance **c** is determined by any distance of the optical matrix from the end of the spindle **1,** which is different from the optical distance **b,** e.g., by the greatest distance of the optical matrix of the electronic optical sensor **31** from the end of the spindle **1,** at which the point of incidence of the laser beam **2** was recorded.

The detecting device **3** in the variants shown in Figs. 2a and 2b and in other above-mentioned variants with a beam splitter **4** enable, counter to the variant shown in Fig. 1, to monitor continuously the points of incidence of the laser beam **2** or of its components **21, 22,** or the geometric shapes drawn the laser beam or by its components **21, 22.**

The detecting device **3** is in all the variants of embodiment described above provided with an evaluating unit **7,** or more precisely, the electronic optical sensor/sensors **31, 32** are connected to an evaluating unit **7,** which can be either single-purpose or it can be composed of, e.g., a (portable) computer or another similar apparatus.

At least the optical elements of the detecting device **3,** i.e. the electronic optical sensors **31, 32,** or the beam splitter **4** and the auxiliary mirrors **5, 6,** are for protection from undesired pollution mounted in an unillustrated case provided with an inlet of the laser beam **2.**

During the process of determination of the linear deviation **p** and/or **q,** and/or the angular deviation $\beta$ and/or $\gamma$ the spindle **1** remains for the whole time in a fixed position (e.g. entirely inserted in the headstock, or entirely extended out of the headstock, or extended by a predetermined portion out of it), whereby the detecting device **3** or its electronic optical sensor/sensors **31, 32** moves/move at least once, or moves/move relative to it (towards it and/or away from it) in the path or on the plane of the workpiece or a machine part, whose linear deviation **p** and/or **q,** and/or angular deviation $\beta$ and/or $\gamma$ from the axis of rotation of the spindle **1** of the machine is determined/are determined.

At the same time, the points of incidence of the laser beam **2** or of its components **21, 22** or the geometric shapes drawn by the laser beam **2** or by its components **21, 22** are successively or simultaneously recorded, or continuously recorded, at least at two optical distances **b** and **c** from the end of the spindle **1.** Subsequently, these optical distances **b** and **c** change by the same value **e,** namely, e.g., by shifting the detecting device **3** along the path or plane of the workpiece or the machine part, on which the detecting device **3** is mounted, or by shifting its electronic optical sensor/sensors **31, 32,** or by combining these movements towards or away from the end of the spindle **1,** and at those modified optical distances **b+e** and **c+e** (where **e** is negative, if the detecting device **3** or its electronic optical sensor/sensors **31, 32** has/have shifted towards the end of the spindle **1**) from the end of the spindle **1** the points of incidence of the laser beam **2** or of its components **21, 22,** or the geometric shapes drawn by the laser beam **2** or by its components **21, 22** are again successively or simultaneously recorded, or continuously recorded. The shifts $x_b$, $y_b$, or $x_c$, $y_c$ of the points of incidence of the laser beam **2** or of its components **21, 22** or of the center of the geometric shape drawn by the laser beam **2** or by its components **21, 22** in the axis **x,** or **y** on the optical matrix of the electronic optical sensor/sensors **31, 32** at the optical distances **b+e,** or **c+e** from the end of the spindle **1** from their original position **C1, C2** (Fig. 1) then directly represent the linear deviations **p** ($p_b$, $p_c$) or **q** of the particular path and/or plane of the workpiece and/or the machine part at this/these optical distance/distances. From these shifts $x_b$, $y_b$, or $x_c$, $y_c$ it is then possible to calculate for each optical distance **b+e** and **c+e** from the end of the spindle **1** a corresponding angular deviation $\beta$, or $\gamma$ at these optical distances from the end of the spindle **1,** e.g., as follows:

$$\beta = arctg\left(\frac{y_c - y_b}{a}\right), \qquad \gamma = arctg\left(\frac{x_c - x_b}{a}\right),$$

where: $y_c$, $x_c$ is a component of displacement of the points of incidence of the laser beam **2** or of its component **21, 22** or of the center of the geometric shape drawn by the laser beam **2** or by its component **21, 22** recorded by the electronic optical sensor **31** or **32** in the case of a change of the optical distance **c** of the sensor **31** or **32** from the end of the spindle **1** into the optical distance **c+e** from the end of the spindle **1** in the axis **y** or **x,**

$y_b$, $x_b$ is a component of displacement of the points of incidence of the laser beam **2** or its component **21, 22** or of the center of the geometric shape drawn by the laser beam **2** or by its component **21, 22** recorded by the electronic optical sensor **31** in the case of a change of the optical distance **b** of the sensor **31** from the end of the spindle **1** into the optical distance **b+e** from the end of the spindle **1** in the axis **y,** or **x,**

and **a** is a difference in the optical distances **b** and **c,** or **b+e** and **c+e.**

In the event that for any reason it is necessary to determine the linear deviation **p** and/or **q,** and/or the angular deviation $\beta$ and/or $\gamma$ of the path or plane of the workpiece or the machine part relative to any point on the axis of rotation of the spindle at the distance **u** from the end of the spindle **1,** e.g. in the event that due to the construction of the machine it is impossible to locate the detecting device **3** in that place or it is impossible to place the optical matrix of one of its electronic optical sensors **31, 32** in that place, this deviation/these deviations is/are determined or continuously determined by the calculation from the components of the shift $y_b/x_b$, $y_c/x_c$ of the points of incidence of the laser beam **2** or its components **21, 22** or of the centers of the geometric shapes drawn by the laser beam **2** or by its components **21, 22** on the optical matrix of the electronic optical sensor/sensors **31, 32** in the respective axis - e.g. in the case of a horizontal spindle **1** shown in Fig. 1 in the vertical axis **y** and in the transverse axis **x,** e.g. as follows:

$$p = y_b - \frac{(b - u)(y_c - y_b)}{a}$$

or:

$$q = x_b - \frac{(b - u)\,(x_c - x_b)}{a}$$

where: $y_b$, $x_b$ is a component of displacement of the points of incidence of the laser beam **2** or its component **21, 22** or of the center of the geometric shape drawn by the laser beam **2** or by its component **21, 22** recorded by the electronic optical sensor **31** in the case of change of the optical distance **b** of the sensor **31** from the end of the spindle **1** into the optical distance **b+e** from the end of the spindle **1** in the axis **y,** or **x,**

**u** is a distance of the point for which the deviation/deviations are calculated from the end of the spindle **1,**

$y_c$, $x_c$ is a component of displacement of the points of incidence of the laser beam **2** or its component **21, 22** or of the center of the geometric shape drawn by the laser beam **2** or by its component **21, 22** recorded by the electronic optical sensor **31** or **32** in the case of change of the optical distance **c** of the sensor **31** or **32** from the end of the spindle **1** into the optical distance **c+e** from the end of the spindle **1** in the axis **y,** or **x,**

and **a** is a difference in the optical distances **b** and **c,** or **b+e** and **c+e.**

Moreover, according to the requirements, it is possible to determine or continuously determine only the linear deviation **p** and/or **q**, and/or the angular deviation $\beta$ and/or $\gamma$ in the direction of one of the axes **x, y.**

If it is necessary to determine the linear deviation **p** and/or **q**, and/or the angular deviation $\beta$ and/or $\gamma$ of the path and/or plane of the workpiece and/or the machine part from a general point off the axis of rotation of the spindle **1** which is constituted by the laser beam **2**, it is in that case advisable to apply a suitable spatial transform equation.

In a variant where the detecting device **3** with one electronic optical sensor **31** is used, the sensor **31** moving between the positions at the optical distances **b, b+e, c, c+e** from the end of the spindle **1,** it is advantageous if the individual optical distances are set in such a manner that the optical distance **c** equals the optical distances **b+e** and, consequently, the electronic optical sensor **31** can move (by itself or in combination with the movement of the entire detecting device **3**) substantially only between three positions at the optical distances **b, b+e=c** and **c+e** from the end of the spindle **1.**

The same algorithm and calculation are then used also in other variants of determination or continuous determination of the linear deviation **p** or **q** and/or the angular deviation $\beta$ or $\gamma$ a of the path and/or plane of the workpiece and/or the machine part from the axis of rotation of the spindle **1** according to the invention, regardless of the order in which the points of incidence of the laser beam **2** are recorded on the optical matrices of the individual electronic optical sensors **31** or **32**, or, the optical matrix of one electronic optical sensor **31.**

If needed, it is also possible to record at least once the points of incidence of the laser beam **2** on the optical matrices of the electronic optical sensors **31, 32** or on the optical matrix of one electronic optical sensor **31** at two different optical distances between the optical distances **b** and **b+e,** or **c** and **c+e,** which enables to obtain a certain insight into the progress of the linear deviation **p** and/or **q**, and/or the angular deviation $\beta$ and/or $\gamma$ along the path and/or the plane of the workpiece and/or the machine part. This progress and/or value of the linear deviation **p** and/or **q** at the specific distance **u** from the end of the spindle **1** can be, e.g., approximated from these recorded displacements of the points of incidence of the laser beam **2** or its components **21, 22** or of the centers of the geometric shapes drawn by the laser beam **2** or by its components **21, 22** by using an appropriate mathematical model.

In addition, the values of the linear deviation **p** and/or **q** and/or the angular deviation $\beta$ and/or $\gamma$ are preferably determined in real time or nearly real time in an evaluating unit **7**, optionally they are also stored in its memory or in the memory assigned with it, or they are displayed on the evaluating unit assigned, e.g. in a numeric and/or in a graphic form.

So as to improve the accuracy of determination and especially so as to eliminate possible inaccurate mounting of the source of the laser beam **2** off the axis of the rotation of the spindle **1**, it is advantageous if during determination of linear deviation **p** and/or **q,** and/or angular deviation $\beta$ and/or $\gamma$ the spindle **1** rotates at a speed which does not blur images captured by the electronic optical sensor/sensors **31, 32** and does not cause excessive machine vibrations. According to the electronic optical sensors **31, 32** used and the type of the machine, the speed may range from units to thousands of revolutions per minute.

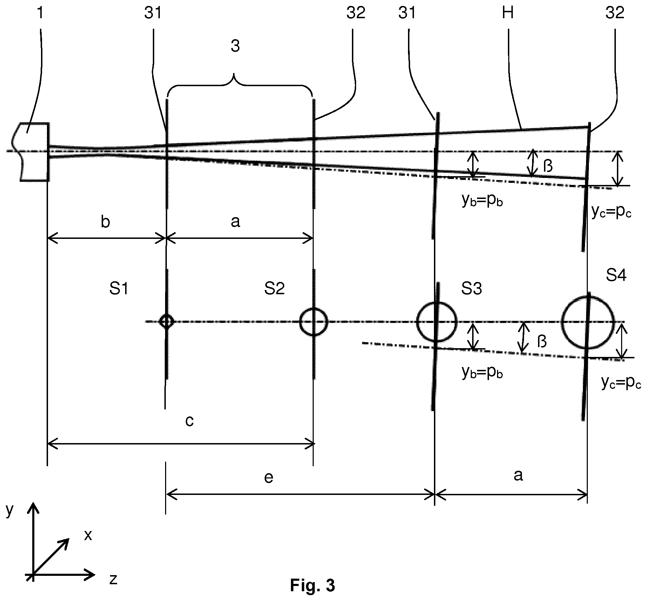

In applications where the source of the laser beam **2** is mounted with certain slight inaccuracy off the axis of the spindle **1** (Fig. 3) the laser beam **2** is then generally skew relative to the axis of the rotation of the spindle **1** and during the rotation of the spindle **1** it creates a surface of lateral area of one-sheeted rotational hyperboloid **H**. The optical matrices of the individual electronic optical sensors **31, 32** or the optical matrix of one electronic optical sensor **31** at two different optical distances **b** and **c,** or **b+e** and **c+e** from the end of the spindle **1,** then record/records the cross-sections **S1, S2, S3** and **S4** of the hyperboloid **H** which have a shape of a circle if the area of the optical matrix of these optical sensors **31, 32,** or of the electronic sensor **31** is perpendicular to the axis of the hyperboloid **H,** while in the case of a different angle between the plane of the optical matrix and the axis of the hyperboloid **H** (for example, due to a deviation) they acquire the shape of an ellipsis. The centers of these cross-sections **S1** to **S4** then determine the rotation axis of the laser beam **2** source and thus also the real rotation axis of the end of the spindle **1** of the machine tool, which is identical with it, whereby the linear deviation **p** and/or **q** and/or the angular deviation β and/or γ is determined by the above-mentioned method from the displacement of the centers of these geometric shapes on the optical matrices of the electronic optical sensors **31, 32** upon a change of the optical distance **b** into the optical distance **b+e** and the optical distance **c** into the optical distance **c+e.**

The error which arises due to the fact that the centers of the cross-sections **S1** to **S4** of the hyperboloid **H** created by the laser beam **2,** are not geometrically identical with the intersection of the axis of the hyperboloid **H,** is nevertheless totally negligible (under conditions usual for existing machine tools it does not exceed 0.1 μm). However, should need arise, it may be approximated with the help of a suitable mathematical algorithm and may be used for correction of calculations.

The error arising during the inclination or shifting of the coordinate system as a result of the inclination of the measuring device **3** during its shifting is also negligible, since its size in the case of machine tools is at least by 3 orders smaller than the shift in the measuring device **3**. Nevertheless, also this error may be approximated by an appropriate mathematical algorithm and may be used for correction of calculations.

Substantially, any known planar optical sensors can be used as electronic optical sensors **31, 32,** and in a simple embodiment of the detecting device **3** also linear optical sensors - e.g. CCD or CMOS sensors, which may be in this case preferably black and white. Also, it is advantageous to use cameras which allow controlled sensing of a large number of images and thus more accurate results of determination or continuous determination of the linear deviation **p** and/or **q** and/or the angular deviation β and/or γ, since during the rotation of the spindle **1** they enable to record a number of images of the incident laser beam **2**. For evaluation, it is possible to use known methods and programs from the theory of image processing, which are easily available.

For solving specific tasks or modelling specific situations, the clamping cone of the spindle **1** may be adapted so that weight or another member for loading the spindle **1** can be attached to it.

The method of determination of the linear deviation **p** and/or **q** and/or angular deviation β and/or γ and/or of the path or plane of a workpiece /or a machine part from the axis of rotation of the spindle **1** of the machine according to the invention is applicable substantially in all machines or devices with a horizontal, vertical or angular rotary spindle **1,** both fixed and telescopic, whereby preferably it is used especially on machine tools, e.g., lathes and boring and milling machines.

However, the above-described detecting devices **3** for determination or continuous determination of the linear deviation **p** and/or **q** and/or angular deviation β and/or γ of the path or plane of a workpiece or a machine part from the axis of rotation of the spindle **1**, may be used, apart from the methods described above, without any further modification, for determination or continuous determination of deflection and/or the process of deflection of a horizontal or angular spindle **1** and/or for determination of an inclination angle and/or the process of bending of horizontal or angular spindle **1,** especially a horizontal or angular spindle **1** of a machine tool (e.g. of boring and milling machines). In that case, a source of a laser beam **2** is clamped to the spindle **1** and at least at two different optical distances **b, c** from the end of the spindle **1** with a fixed detecting device **3** according to the invention during at least two different extensions of the spindle **1** out of the headstock are successively or simultaneously recorded or continuously recorded the points of incidence of the laser beam **2** or of its components **21, 22**, or the geometric shapes drawn by the laser beam **2** or by its components **21, 22**, whereby the deflection of the spindle **1** and/or the inclination angle of the spindle **1** is determined, or continuously determined, or, more specifically, the process of the deflection of the spindle **1** and/or the process of the bending of the spindle **1** is determined or continuously determined, from vertical components or components oriented downwards of the displacement of the points of incidence of the laser beam **2** or of its components **21, 22**, or of the centers of geometric shapes drawn by the laser beam **2** or by its components **21, 22** at the optical distances **b, c** from the end of the spindle **1,** from the difference **a** in the optical distances **b, c,** from one of the optical distances **b** or **c** from the end of the spindle **1,** and from the difference in the extension of the spindle **1** out of the headstock.

## Claims

1.  A method of determination of a linear deviation p or q and/ or an angular deviation β or y of the path or plane of a workpiece or of a machine part from the axis of rotation of a spindle (1) of the machine in mutually perpendicular axes y and x which are also perpendicular to the axis of rotation of the spindle, comprising the following steps:

    - clamping a source of a laser beam (2) to the spindle (1);
    - providing a detecting device (3) with at least one electronic optical sensor (31), (32);
    - successively or simultaneously or continuously recording, by one electronic optical sensor (31), points of incidence of the laser beam (2) or of its components (21), (22), created by splitting the laser beam (2) by a beam splitter (4), or geometric shapes drawn by the laser beam (2) or by its components (21), (22), at least at two optical distances b and c from the end of the spindle (1) on the path or plane of a workpiece or a machine part;

- shifting the detecting device (3) and/or its electronic optical sensor/sensors (31), (32) in relation to the end of the spindle (1), each by the same distance e;

- successively or simultaneously or continuously recording, by one electronic optical sensor (31), (32), points of incidence of the laser beam (2) or of its components (21), (22), created by splitting the laser beam (2) by a beam splitter (4), or geometric shapes drawn by the laser beam (2) or by its components (21), (22), at the optical distances b+e and c+e from the end of the spindle (1) on the path or plane of a workpiece or a machine part;

- directly determining the linear deviation $p_b$ or $q_b$ of the path or plane of the workpiece or the machine part from the axis of rotation of the spindle (1) at the optical distance b +e from the end of the spindle by the displacement $y_b$ or $x_b$ in the axis y or x of the point (C1) of incidence of the laser beam (2) or of its components (21), (22) or of the center of the geometric shape drawn by the laser beam (2) or by its components (21), (22), which occurs upon change of the optical distance b into the optical distance b+e;

- directly determining the linear deviation $p_c$ or $q_c$ of the path or plane of the workpiece or the machine part from the axis of rotation of the spindle (1) at the optical distance c +e from the end of the spindle (1) by the displacement $y_c$ or $x_c$ in the axis y or x of the point (C2) of incidence of the laser beam (2) or of its components (21), (22) or of the center of the geometric shape drawn by the laser beam (2) or by its components (21), (22), which occurs upon change of the optical distance b into the optical distance b+e; and

- calculating or continuously calculating the angular deviation $\beta$ or $\gamma$ at the optical distance b+e or c+e from the linear deviations $p_b$ and $p_c$, or $q_b$ and $q_c$, thus obtained.

2. The method according to claim 1, **characterized in that** the angular deviation $\beta$ or $\gamma$ is calculated or continuously calculated from the linear deviations (p, q) as follows:

$$ß = arctg\left(\frac{y_c - y_b}{a}\right),$$

or

$$\gamma = arctg\left(\frac{x_c - x_b}{a}\right),$$

where a is a difference in the optical distances b and c, or in the optical distances b+e or c+e.

3. The method according to claim 1, **characterized in that** the linear deviation p or q of the path or plane of a workpiece or a machine part at a point on the axis of rotation of the spindle (1) at the distance u from the end of the spindle (1), is determined or continuously determined as:

$$p = y_b - \frac{(b-u)\,(y_c-y_b)}{a},$$

or

$$q = x_b - \frac{(b-u)\,(x_c-x_b)}{a},$$

where: u is a distance of the point for which the linear deviation p and/or q is determined from the end of the spindle (1), and a is a difference in the optical distance b and c, or a difference in the optical distances b+e and c+e.

4. The method according to claim 1, **characterized in that** the points of incidence of the laser beam (2) or the geometric shapes drawn by the laser beam (2) are recorded, or continuously recorded, on the optical matrix of one electronic optical sensor (31) arranged opposite the end of the spindle (1), which moves between the positions at the optical distances b, b+e, c, c+e from the end of the spindle (1).

**5.** The method according to claim 4, **characterized in that** the optical distance c equals the optical distances b+e, whereby the electronic optical sensor (31) moves between the positions at the optical distances b, b +e=c and c+e from the end of the spindle (1).

**6.** The method according to claim 1, **characterized in that** the points of incidence of the laser beam (2) or the geometric shapes drawn by the laser beam (2) are recorded, or continuously recorded, successively on the optical matrices of two electronic optical sensors (31), (32) arranged behind each other opposite the end of the spindle (1) at the optical b and c, or b+e and c +e from the end of the spindle (1), whereby the electronic optical sensor (31), which is arranged at a lesser optical distance b, or b+e from the end of the spindle (1), moves at least temporarily off the path of the laser beam (2) for the purpose of recording the points of incidence of the laser beam (2) or the geometric shape drawn by the laser beam (2) on the optical matrix of the optical sensor (32) arranged at a greater optical distance c or c+e from the end of the spindle (1).

**7.** The method according to claim 1, **characterized in that** the points of incidence of the components (21), (22) of the laser beam (2) or the geometric 15 shapes drawn by the components (21), (22) of the laser are recorded, or continuously recorded, on the optical matrices of two electronic optical sensors (31), (32), whereby each of the components (21), (22) of the laser beam (2) strikes the optical matrix of the electronic optical sensor (31), (32) located at a different optical distance b, or at the optical distance b+e and c, or at the optical distance c+e from the end of the spindle (1) or draws a geometric shape on it.

**8.** The method according to claim 7, **characterized in that** at least one component (21), (22) of the laser beam (2) is reflected by an auxiliary mirror (5) at least once before striking the optical matrix of the electronic optical sensor (31), (32).

**9.** The method according to any of claims 1 to 8, **characterized in that** the spindle (1), along with the source of the laser beam (2), rotates during recording the points of incidence of the laser beam (2) or of its components (21), (22), or the geometric shapes drawn by the laser beam (2) or by its components (21), (22).


**Patentansprüche**

**1.** Verfahren zur Festlegung einer linearen Abweichung p oder q und/oder einer Winkelabweichung ß oder y einer Bahn oder einer Fläche eines Werkstückes oder eines Teils einer Maschine von einer Rotationsachse einer Spindel (1) einer Maschine in gegenseitig senkrechten Achsen y und x, die gleichzeitig zur Rotationsachse einer Spindel senkrecht sind, das folgende Schritte aufweist:

- Einspannen einer Quelle eines Laserstrahls (2) in eine Spindel (1);
- Verwendung einer Sensoreinrichtung (3) mit mindestens einem elektronischen optischen Sensor (31), (32);
- fortschreitende oder gleichzeitige oder kontinuierliche Aufnahme der Stellen eines Einfalles eines Laserstrahls (2) oder seiner Komponenten (21), (22), die durch eine Teilung eines Laserstrahls (2) durch einen Teiler (4) eines Laserstrahls gebildet werden, oder der durch einen Laserstrahl (2) oder seine Komponenten (21), (22) beschriebenen geometrischen Formen in mindestens zwei optischen Abständen b und c vom Ende einer Spindel (1) auf einer Bahn oder einer Fläche eines Werkstückes oder einem Teil einer Maschine durch einen elektronischen optischen Sensor (31);
- Verschiebung einer Sensoreinrichtung (3) und/oder ihres/ihrer elektronischen optischen Sensors/Sensoren (31), (32) gegenüber dem Ende einer Spindel (1) um denselben Wert (e);
- fortschreitende oder gleichzeitige oder kontinuierliche Aufnahme der Stellen eines Einfalles eines Laserstrahls (2) oder seiner Komponenten (21), (22), die durch eine Teilung eines Laserstrahls (2) durch einen Teiler (4) eines Laserstrahls gebildet werden, oder der durch einen Laserstrahl (2) oder seine Komponenten (21), (22) beschriebenen geometrischen Formen in optischen Abständen b+e und c+e vom Ende einer Spindel (1) auf einer Bahn oder einer Fläche eines Werkstückes oder einem Teil einer Maschine durch einen elektronischen optischen Sensor (31), (32);
- direkte Festlegung einer linearen Abweichung $p_b$, bzw. $q_b$ einer Bahn oder einer Fläche eines Werkstückes oder eines Teils einer Maschine von der Rotationsachse einer Spindel (1) in einem optischen Abstand b+e vom Ende einer Spindel mittels einer Verschiebung $y_b$, bzw. $x_b$ der Stelle (C1) eines Einfalls eines Laserstrahls (2) oder seiner Komponenten (21), (22) oder der Mitte der durch einen Laserstrahl (2) oder seine Komponenten (21), (22) beschriebenen geometrischen Form in der Achse y oder x, zu der es bei einer Änderung des optischen Abstandes b zum optischen Abstand b+e kommt;

- direkte Festlegung einer linearen Abweichung $p_c$, bzw. $q_c$ einer Bahn oder einer Fläche eines Werkstückes oder eines Teils einer Maschine von der Rotationsachse einer Spindel (1) in einem optischen Abstand c+e vom Ende einer Spindel mittels einer Verschiebung $y_c$, bzw. $x_c$ der Stelle (C2) eines Einfalls eines Laserstrahls (2) oder seiner Komponenten (21), (22) oder der Mitte der durch einen Laserstrahl (2) oder seine Komponenten (21), (22) beschriebenen geometrischen Form in der Achse y oder x, zu der es bei einer Änderung des optischen Abstandes b zum optischen Abstand b+e kommt;

- Berechnung oder eine durchlaufende Berechnung einer Winkelabweichung ß oder $\gamma$ im optischen Abstand b+e oder c+e aus den so ermittelten linearen Abweichungen $p_b$ und $p_c$, bzw. $q_b$ und $q_c$.

2.  Verfahren nach dem Anspruch 1, **dadurch gekennzeichnet, dass** die Winkelabweichung ß oder y aus den linearen Abweichungen (p, q) wie folgt berechnet oder durchlaufend berechnet wird:

$$ß = arctg\left(\frac{y_c - y_b}{a}\right),$$

bzw.

$$\gamma = arctg\left(\frac{x_c - x_b}{a}\right),$$

wo a Unterschied der optischen Abstände b und c, bzw. der optischen Abstände b+e und c+e ist.

3.  Verfahren nach dem Anspruch 1, **dadurch gekennzeichnet, dass** die lineare Abweichung p oder q einer Bahn oder einer Fläche eines Werkstückes oder eines Teils einer Maschine im Punkt auf der Rotationsachse einer Spindel (1) im Abstand u vom Ende einer Spindel (1) wie folgt festgelegt oder durchlaufend festgelegt wird:

$$p = y_b - \frac{(b - u)\,(y_c - y_b)}{a},$$

bzw.

$$q = x_b - \frac{(b-u)\,(x_c - x_b)}{a},$$

wo u Abstand des Punktes ist, für den die lineare Abweichung p und/oder q vom Ende einer Spindel (1) festgelegt wird, und a Unterschied der optischen Abstände b und c, bzw. der optischen Abstände b+e und c+e ist.

4.  Verfahren nach dem Anspruch 1, **dadurch gekennzeichnet, dass** die Stellen eines Einfalls eines Laserstrahls (2) oder die durch einen Laserstrahl (2) beschriebenen geometrischen Formen auf einer optischen Matrix von einem elektronischen optischen Sensor (31) aufgenommen, bzw. durchlaufend aufgenommen werden, der gegen das Ende der Spindel (1) angeordnet ist, die sich zwischen den Lagen in optischen Abständen b, b+e, c, c+e vom Ende der Spindel (1) bewegt.

5.  Verfahren nach dem Anspruch 4, **dadurch gekennzeichnet, dass** der optische Abstand c dem optischen Abstand b+e gleich ist, wobei sich der elektronische optische Sensor (31) zwischen den Lagen in optischen Abständen b, b+e=c und c+e vom Ende der Spindel (1) bewegt.

6.  Verfahren nach dem Anspruch 1, **dadurch gekennzeichnet, dass** die Stellen eines Einfalls eines Laserstrahls (2) oder die durch einen Laserstrahl (2) beschriebenen geometrischen Formen auf optischen Matrizen von zwei elektronischen optischen Sensoren (31), (32) aufgenommen, bzw. durchlaufend aufgenommen werden, die hintereinander gegen das Ende der Spindel (1) in optischen Abständen b und c, bzw. b+e und c+e vom Ende der Spindel (1) angeordnet sind, wobei der elektronische optische Sensor (31), der in einem kleineren optischen Abstand b, bzw. b+e vom Ende der Spindel (1) angeordnet ist, zur Aufnahme der Stelle eines Einfalls eines Laserstrahls (2)

**EP 3 029 417 B1**

oder der durch einen Laserstrahl (2) beschriebenen geometrischen Form auf einer optischen Matrix eines optisches Sensors (32), der in einem größeren optischen Abstand c, bzw. c+e vom Ende der Spindel (1) angeordnet ist, mindestens vorübergehend außerhalb der Bahn des Laserstrahls (2) verschoben wird.

7. Verfahren nach dem Anspruch 1, **dadurch gekennzeichnet, dass** die Stellen eines Einfalls der Komponenten (21), (22) eines Laserstrahls (2) oder die durch die Komponenten (21), (22) eines Laserstrahls beschriebenen geometrischen Formen auf optischen Matrizen von zwei elektronischen optischen Sensoren (31), (32) aufgenommen, bzw. durchlaufend aufgenommen werden, wobei jede der Komponenten (21), (22) eines Laserstrahls (2) auf einer optischen Matrix eines elektronischen optischen Sensors (31), (32) fällt oder eine geometrische Form beschreibt, der in einem anderen optischen Abstand b, bzw. b+e, und c, bzw. c+e vom Ende der Spindel (1) platziert ist.

8. Verfahren nach dem Anspruch 7, **dadurch gekennzeichnet, dass** mindestens eine Komponente (21), (22) eines Laserstrahls (2) vor dem Einfall auf eine optische Matrix eines elektronischen optischen Sensors (31), (32) mindestens einmal durch einen Hilfsspiegel (5) reflektiert wird.

9. Verfahren nach einem der Ansprüche 1 bis 8, **dadurch gekennzeichnet, dass** sich die Spindel (1) zusammen mit einer Quelle eines Laserstrahls (2) bei der Aufnahme von Stellen eines Einfalls eines Laserstrahls (2) oder seiner Komponenten (21), (22), oder der durch einen Laserstrahl (2) oder seine Komponenten (21), (22) beschriebenen geometrischen Formen dreht.

**Revendications**

1. Procédé de détermination de la déviation linéaire p ou q et/ou de la déviation angulaire β ou γ de la trajectoire ou de la surface de la pièce d'ouvrage ou d'une partie de la machine par rapport à l'axe de rotation de la broche (1) de la machine dans les axes perpendiculaires y et x qui sont, en même temps, perpendiculaires à l'axe de rotation de la broche, représenté par les démarches suivantes:

   - fixation de la source du rayon laser (2) dans la broche (1) ;
   - utilisation de dispositif de détection (3) avec au moins un capteur optoélectronique (31), (32) ;
   - enregistrement progressif ou simultané ou continu des points d'impact du rayon laser (2) ou de ses éléments (21), (22) créés par division du rayon laser (2) à l'aide du séparateur de faisceau (4), ou par le rayon laser (2) ou par les formes géométriques dessinées par ses éléments (21), (22), dans au moins deux distances optiques b et c depuis l'extrémité de la broche (1) sur la trajectoire ou la surface de la pièce d'ouvrage ou d'une partie de la machine à l'aide d'un capteur optoélectronique (31) ;
   - déplacement du dispositif de détection (3) et/ou de son/ses capteur/s optoélectronique/s (31), (32) de la même distance (e) par rapport à l'extrémité de la broche (1) ;
   - enregistrement progressif ou simultané ou continu des points d'impact du rayon laser (2) ou de ses éléments (21), (22) créés par division du rayon laser (2) à l'aide du séparateur de faisceau (4), ou par le rayon laser (2) ou par les formes géométriques dessinées par ses éléments (21), (22), dans les distances optiques b+e et c+e depuis l'extrémité de la broche (1) sur la trajectoire ou la surface de la pièce d'ouvrage ou d'une partie de la machine à l'aide d'un capteur optoélectronique (31), (32) ;
   - détermination directe de la déviation linéaire $p_b$ ou bien $q_b$ de la trajectoire ou la surface de la pièce d'ouvrage ou d'une partie de la machine par rapport à l'axe de rotation de la broche (1) dans la distance optique b+e depuis l'extrémité de la broche par l'intermédiaire de déplacement $y_b$ ou bien $x_b$ du point de contact (C1) du rayon laser (2) ou de ses éléments (21), (22) ou du centre de la forme géométrique dessinée sur l'axe y ou x par le rayon laser (2) ou ses éléments (21), (22), réalisé lors de la transformation de la distance optique b en distance optique b+e ;
   - détermination directe de la déviation linéaire $p_c$ ou bien $q_c$ de la trajectoire ou la surface de la pièce d'ouvrage ou d'une partie de la machine par rapport à l'axe de rotation de la broche (1) dans la distance optique c+e depuis l'extrémité de la broche (1) par l'intermédiaire de déplacement $y_c$ ou bien $x_c$ du point de contact (C2) du rayon laser (2) ou de ses éléments (21), (22) ou du centre de la forme géométrique dessinée sur l'axe y ou x par le rayon laser (2) ou ses éléments (21), (22), réalisé lors de la transformation de la distance optique b en distance optique b+e ;
   - calcul ou calcul en continu de la déviation angulaire β ou γ dans la distance optique b+e ou c+e à partir de déviations linéaires $p_b$ et $p_c$ ou bien $q_b$ et $q_c$ ainsi déterminées.

2. Procédé selon la revendication 1, **caractérisé en ce que** la déviation angulaire β ou γ est calculée ou calculée en continu à partir des déviations linéaires (p, q) de manière suivante :

$$\text{ß} = arctg\left(\frac{y_c - y_b}{a}\right),$$

ou bien

$$\gamma = arctg\left(\frac{x_c - x_b}{a}\right),$$

où a est la différence entre les distances optiques b et c ou bien entre les distances optiques b+e et c+e.

3. Procédé selon la revendication 1, **caractérisé en ce que** la déviation angulaire p ou q de la trajectoire ou de la surface de la pièce d'ouvrage ou d'une partie de la machine sur un point sur l'axe de rotation de la broche (1) dans la distance u depuis l'extrémité de la broche (1) est déterminée ou déterminée en continu de manière suivante :

$$p = y_b - \frac{(b-u)\,(y_c - y_b)}{a},$$

ou bien

$$q = x_b - \frac{(b-u)\,(x_c - x_b)}{a},$$

où u est la distance du point pour lequel la déviation linéaire p et/ou q est déterminée depuis l'extrémité de la broche (1),
et a est la différence entre les distances optiques b et c ou bien entre les distances optiques b+e et c+e.

4. Procédé selon la revendication 1, **caractérisé en ce que** les points d'impact du rayon laser (2) ou les formes géométriques dessinées par le rayon laser sont enregistrés ou enregistrés de manière continuelle sur la matrice optique d'un capteur optoélectronique (31) disposé à l'opposé de l'extrémité de la broche (1), qui se déplace entre les positions dans les distances optiques b, b+e, c, c+e depuis l'extrémité de la broche (1).

5. Procédé selon la revendication 4, **caractérisé en ce que** la distance optique c est égale à la distance optique b+e, tandis que le capteur optoélectronique (31) se déplace entre les positions dans les distances optiques b, b+e=c et c+e depuis l'extrémité de la broche (1).

6. Procédé selon la revendication 1, **caractérisé en ce que** les points d'impact du rayon laser (2) ou les formes géométriques dessinées par le rayon laser (2) sont enregistrés ou enregistrés de manière continuelle sur les matrices optiques de deux capteurs optoélectroniques (31), (32) disposés l'un après l'autre dans le sens opposé à l'extrémité de la broche (1) dans les distances optiques b et c ou bien b+e et c+e depuis l'extrémité de la broche (1), tandis que le capteur optoélectronique (31), disposé dans une distance optique plus courte b ou bien b+e depuis l'extrémité de la broche (1) se déplace au moins temporairement en dehors de la trajectoire du rayon laser (2) pour effectuer l'enregistrement du point de contact du rayon laser (2) ou de la forme géométrique désignée par le rayon laser (2) sur la matrice optique du capteur optique (32) disposé dans une distance optique plus importante c ou bien c+e depuis l'extrémité de la broche (1).

7. Procédé selon la revendication 1, **caractérisé en ce que** les points d'impact des éléments (21), (22) du rayon laser (2) ou les formes géométriques dessinées par les éléments (21), (22) du rayon laser sont enregistrés ou enregistrés de manière continuelle sur les matrices optiques de deux capteurs optoélectroniques (31), (32), tandis que chacun des éléments (21), (22) du rayon laser (2) entre en contact ou dessine la forme géométrique sur la matrice optique du capteur optoélectronique (31), (32) situé dans une autre distance optique b ou bien b+e, et c ou bien c+e depuis l'extrémité de la broche (1).

8. Procédé selon la revendication 7, **caractérisé en ce que** au moins un élément (21), (22) du rayon laser (2) est reflété au moins une fois par un miroir auxiliaire (5) avant d'entrer en contact avec la matrice optique du capteur optoélectronique (31), (32).

9. Procédé selon l'une des revendications 1 à 8, **caractérisé en ce que** la broche (1) tourne avec la source du rayon laser (2) lors de l'enregistrement des points d'impact du rayon laser (2) ou de ses éléments (21), (22), ou des formes géométriques dessinées par le rayon laser (2) ou par ses éléments (21), (22).

Fig. 1

**Fig. 2a**

**Fig. 2b**

**Fig. 3**